# EUROPEAN PATENT APPLICATION

(11) **EP 1 543 729 A1**
(43) Date of publication of application: **22.06.2005**
(21) Application number: 03447292.8
(22) Date of filing: 16.12.2003
(51) Int. Cl.: A23K 1/00, A23K 1/18

(54) **Feed for aquatic organism, containing algae and/or yeast**

(71) Applicant: Inve Technologies N.V., 9200 Dendermonde (BE)
(72) Inventor: Dhert, Philippe, 9550 Herzele (BE)
(74) Representative: Van Reet, Joseph

(57) **Abstract**

Feed for the culture of aquatic organisms, in particular of filter feeding organisms like rotifers or *Artemia*, containing at least partially dried algae and/or yeast. The feed comprises a gelled body, at least 30% by weight of which is formed by a gelling agent and water. The advantage of the present invention is that algae or yeast released from the gel when introduced in the culture medium hardly clog together compared to non-gelled diets. This way, the particle size of the released feed in the culture medium is appropriate for the prey organisms.

## Description

The present invention relates to a feed for the culture of aquatic organisms, in particular filter feeding organisms, containing an amount of at least 20% by weight, preferably at least 25% by weight, dry matter of at least partially dried cells and/or cell fragments of unicellular algae and/or yeast.

Aquatic filter feeding organisms, in particular zooplanctonic organisms that are used in marine aquaculture as live prey organisms like rotifers *(Brachionus* species) and the larvae of the brine shrimp *Artemia,* require suspended feed particles or globules with a particle size diameter of between 0.1 and 50 µm.

Rotifers and *Artemia* are widely used live feed organisms for marine fish larvae. Both organisms are obligate filter feeders. Some hatcheries rely on the production of live algae for the culture of filter feeding organisms. Since this production is costly and often unpredictable in quality and quantity, most hatcheries have attempted to develop suitable artificial diets. Over the last 20 years many culture and enrichment products were developed including dried unicellular algae, algal pastes, yeast and/or emulsified preparations, compound diets, micro-particulate diets or self-emulsifying concentrates. There are many problems associated with the development of artificial diets. To be acceptable, these diets must comply with the right dimensions, be nontoxic and easily assimilated and digested. Moreover, the feeds must remain in suspension, and preferably be provided on a continuous basis.

Most research on micro-algal diets was done with bivalve molluscs because the production of live algae in hatcheries is costly and often unpredictable and the culture of bivalves on artificial diets has so far not been very successful. Different forms of algal diets tried out in the culture of bivalve molluscs are refrigerated algal pastes, freeze-dried or spray-dried micro algae or heterothropically grown spray-dried algae (Knauer, J. and Southgate, P. 1999. A review of the nutritional requirements of bivalves and the development of alternative and artificial diets for bivalve aquaculture. Reviews in Fisheries Science, 7(3&4): 241-280).

Filter feeders like rotifers and *Artemia* on the other hand have successfully been cultured or enriched on artificial (non-algal) feeds, like: yeast-based diets, emulsified preparations, micro-particulate diets etc. Yeast diets are so far the most successful diets, especially for culturing rotifers because of its ease to adapt the digestibility, its availability and its relative low cost. Besides yeast based diets, artificial diets based on algae are still an option because of certain nutritional and health components found in micro-algae. However, diets based on yeast or algae have some important drawbacks that so-far have not been solved. Drawbacks of the following artificial diets, currently used, are explained:

Algal pastes are micro-algae centrifuged into a paste form and subsequently refrigerated if required. Shelf life of those products is often not more than 1 or 2 weeks, and algae concentration on wet weight basis is rather low, usually less than 20% by weight algae dry matter, which makes the product not practical for commercial use. Spray-dried algae (both autotrophic and heterotrophic cultures) need to be rehydrated in water before use whereby the algae tend to clump together in aggregates. Moreover they need to be fed in different small portions to maintain the concentration of dried algae in suspension as these diets settle out. Freeze-dried algae offer the best quality of product in terms of integrity of the algal cells, but the process is very costly and not practical on industrial scale. Moreover freeze-dried algal cells need to be fed in different small portions to maintain the concentration of the dried algal cells in the water column.

Other algal feeds for marine organisms developed during the last 15 years are among others: feed containing Chlorella blended with microencapsulated oily nutriments-capsules for rotifers and *Artemia* (JP01262758), freeze-dried Chlorella with added phospholipids (JP63164824) for rotifers, a stabilized Chlorella suspension for rotifers (JP10295285) or live Chlorella frozen in blocks of ice (JP20022085023). Still those algal products have one or more of the drawbacks mentioned above: expensive production method which is not feasible on large scale; clumping together, high settlement of algal powder or not practical for use.

In general terms, the same problem counts for yeast diets. Yeast cells or yeast components, though they are of lower nutritional value for the above mentioned organisms, are frequently used because of low production costs. When yeast is introduced in the culture medium, they clump together, causing high settlement, inducing pollution in the culture tanks.

An object to the present invention is therefore to provide a new feed containing the above defined minimum amount of cells and/or cell fragments of unicellular algae and/or yeast, which feed enables to reduce the amount of moisture in the cells and/or cell fragments, i.e. to improved the shelf life, whilst avoiding or at least reducing the clump formation problems associated with spray-dried algae and yeast.

To this end, the feed according to the present invention is characterised in that said feed is in the form of at least one gelled body, which has a weight of at least 1 g and which comprises, in addition to said cells and/or cell fragments of unicellular algae and/or yeast, between 30% and 80% by weight of a water soluble or dispersible gel wherein said cells and/or cell fragments are embedded.

It has been found quite surprisingly that, as a result of the fact that the cells and/or cell fragments are embedded in a gel matrix, they are still released easily in the culture medium, and this not in the form of clumps but mainly in the form of individual cells and/or cell fragments, when lowering the moisture content of the cells and/or cell fragments (for example by a spray-drying process) to increase the shelf life of the feed. Indeed, it has also been found that, notwithstanding the high water content of the gel matrix, the shelf life of the feed is increased by using dryer cell and/or cell fragments. An additional advantage of the feed according to the invention is that the individual cells or fragments are gradually released in the culture medium so that they are readily available for a longer period of time for filter feeding organisms. Since the cells and/or cell fragments have a size of between 0.1 and 50 µm filter feeding organisms easily can take them up.

An important advantage of the invention is that, by the use of dried cells and/or cell fragments, a relatively high content of algae or yeast cells and/or cell fragments can be included in the feed (easily the double amount compared to algae pastes), which can moreover be conserved for longer periods at room temperature. Algal based feeds often have high water content and can only be conserved for a few days or weeks in cold conditions, or need to be frozen. The present invention enables to provide a diet which can be conserved for several months at room temperature.

Another important advantage of the invention is that the gelled body of the feed can be more easily weighed, handled and unpacked without spilling compared to conventional feeds. This improves the accuracy of the determined feed quantity and reduces considerably labour.

In a preferred embodiment of the feed according to the invention, the gelled body comprises at least one anti-microbial agent. An advantage of this embodiment is that the feed enables to assure non-lethal concentrations of the anti-microbial agent for the cultured organisms but at the same time sufficient concentrations to reduce the bacterial load.

In a further preferred embodiment of the feed according to the invention, the gelled body comprises at least one probiotic micro-organism that can replace at least partially the existing bacterial population present in the prey organism, the predator or in the surrounding medium mostly to prevent diseases.

Preferably, the gelled body has a weight of at least 10 g, preferably at least 50 g, more preferably at least 100 g and most preferably at least 200 g. In general, the larger the gelled body, the longer the feed particles and the optional disinfecting agent and/or the probiotic micro-organisms are released.

The present invention also relates to a process to produce the feed and to a method for culturing aquatic organisms wherein the feed is used.

Other particularities and advantages of the invention will become apparent from the following more detailed description of the particular embodiments of the feed, its process and the feeding method according to the present invention. In the examples reference is made to the drawings wherein:

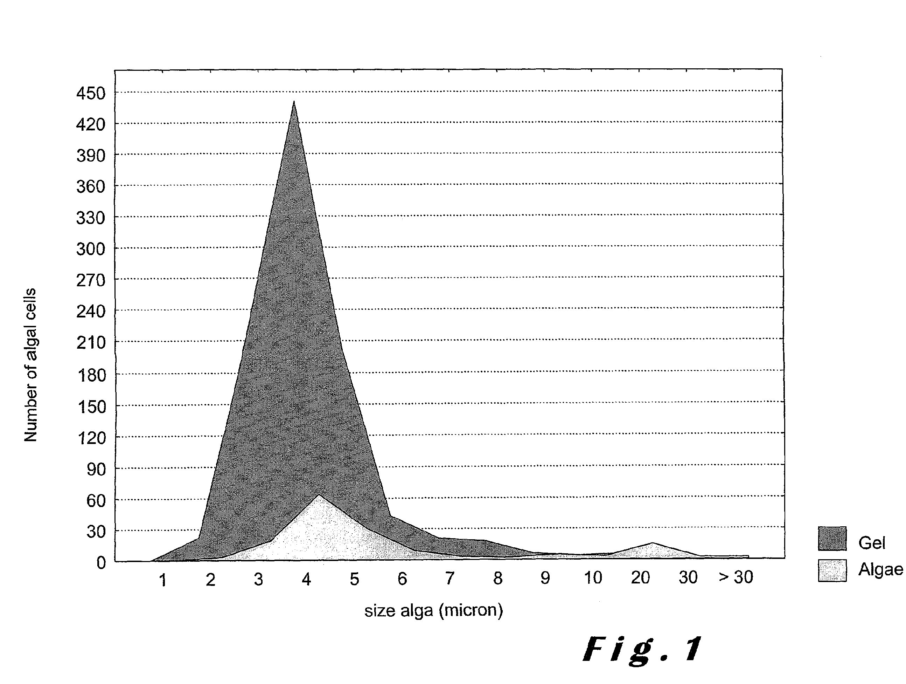

Figure 1 is a graph illustrating the particle size distribution obtained when mixing, by means of a kitchen, blender, a gelled body according to the invention, containing dried algae cells, in water and when mixing the same amount of dried algae cells, as such, in water.

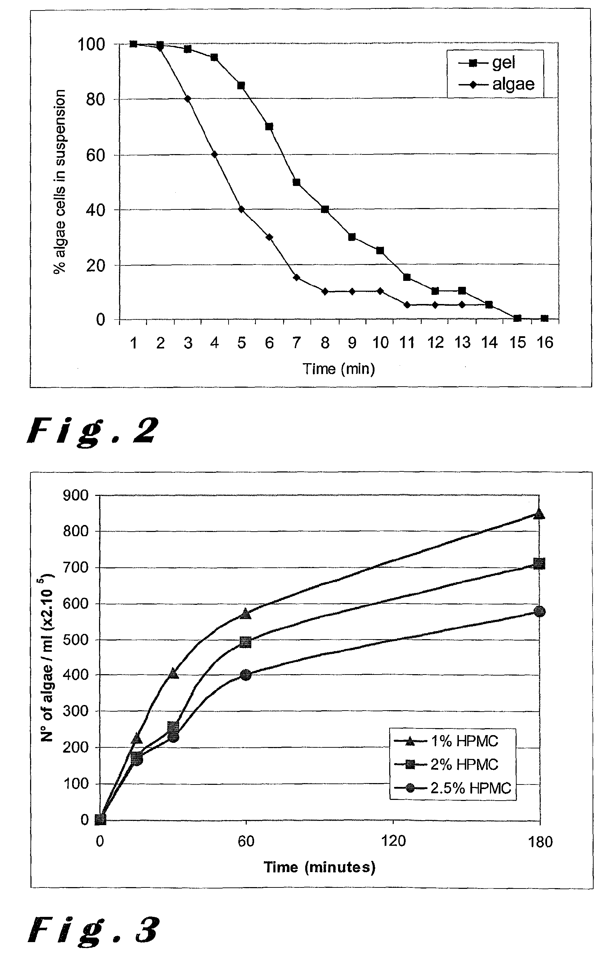

Figure 2 is a graph frustrating the settlement rate of the particles suspended in 1 L Imhoff cones without aeration starting from a gelled body containing the dried algae cell or starting from the dried algae cells as such. The cones were filled with salt water having a salinity of 25 ppt and a temperature of 30°C. Both feeds were dispersed first, by means of a kitchen blender, in the salt water before being added to the cones; and
Figure 3 is a graph illustrating the different speed of release of particles from a gelled body according to the invention containing 1%, 2% and respectively 2.5% gelling agent. The experimental data were obtained by putting a piece of 4g of each gelled feed in 400 ml of Instant Ocean (25 ppt) and shaken on a shaking machine at 175 rpm. The ambient temperature was 21°C. The number of algae released per ml was then counted.

The feed according to the invention is in the form of at least one gelled body. This gelled body may show different consistencies varying from a kneadable material to a rather rigid body. It has a weight of at least 1 g and contains at least partially dried cells and/or cell fragments of unicellular algae and/or yeast. The gelled body comprises between 30% and 80% by weight, preferably between 40% and 60% by weight, of a water soluble or dispersible gel. This gel is formed by at least a gelling agent and water. When the gel contains dissolved water soluble products such as water soluble disinfecting agents, these products are to be comprised in the weight of the gel. When introduced in water, in particular in an aqueous culture medium, the gel dissolves or disperses rather slowly so that the dried algae and/or yeast cells or fragments are slowly released. Importantly, the released cells or fragments substantially do not clump together, even when they are dried by a spray-drying process, and remain for a longer period in the water column compared to not gelled diets. Once the gelled body is introduced in the culture medium the individual cells or fragments of appropriate small sizes (0.1-50 µm) stay mainly suspended in the water until consumed by filter feeding organisms. This slow release feature avoids settling of the diet on the bottom or on the sides of the tanks. A further advantage of the gelled body is that it can be packed or wrapped as such and can be introduced in the culture tank without the need for dissolving or dispersing it first in water. The gelled bodies preferably do not stick to the hands or to the packing material but can easily be unwrapped, weighed and portioned.

The gelled body contains at least 20% by weight, preferably at least 25% by weight of the cells and/or cell fragments of the unicellular algae and/or the yeast. The algae or yeast has to be at least partially dried in order to enable those dry matter contents in the gelled body. The algae or yeast cells can be obtained by a drying process. During the drying process some cells may be ruptured so that also cell fragments are present. Optionally, the dried cells may be fractioned in order to increase the amount of cell fragments. However, since the size of the algae and/or yeast cells is within the range of 0.1 to 50 µm a fractioning step is preferably not carried out. When the gelled body consists only of gel and cells and/or cell fragments, these cells and/or cell fragments may have a maximum moisture content of about 71% by weight for the minimum gel content of 30% by weight. Preferably, the moisture content of the cells and/or cell fragments is lower than 20% by weight, more preferably lower than 15% by weight and most preferably lower than 10% by weight. In this way not only the yeast and/or algae dry matter content of the gelled body can be increased but also the shelf life of the feed. Dried yeast or algae with such dry matter contents are commercially available. They can be produced for example by a freeze-drying process resulting normally in the best quality. In practice, a spray-drying process is however to be preferred since it is less expensive and is feasible for big scale production. Optionally, when the cells or cell fragments may still contain a relatively large amount of moisture, a centrifugation technique could possibly be used additionally.

When drying the cells and/or cell fragments to a moisture content of about 4 to 5% (for example by spray-drying), a dry matter content of at the most about 66 to 67% by weight can be obtained with a minimum gel content of about 30% by weight. Compared to diets consisting in spray-dried algae, lower inclusions are thus reached but the advantage is that in the gelled diet with spray-dried algae, the algae cells or fragments are released separately in the water column with considerably less clump formation.

The gelled body may have any arbitrary shape but is preferably spherical or cylindrical for practical use. Sometimes the gelled body will have a too high specific weight for the culture medium and get stuck on the bottom of the tank. Therefore the gelled body may include non-edible objects or gas producing materials (like polystyrene foam or bicarbonates producing gasses when coming into contact with water) to make the whole gelled body floating or suspending in the culture medium. For the same purpose, the gelled body may be hung in a floating or suspended net close to the water inlet or an oxygen distributor, which additionally improves the releasing features of the gelled body. When inert particles or objects, having a size greater than 0.5 mm, are incorporated in the gelled body, in particular to make it float or to make it sink in the culture medium, these particles or objects are not to be considered as a component of the feed according to the invention and the weight thereof is thus not to be taken into account when determining the relative amounts of the different feed components.

The total weight of the gelled body is preferably at least 10 g to make it more convenient for practical use and to increase the time of release. Since the culture tanks of marine organisms in commercial hatcheries often are of the size of 100 I or more, the total weight of the gelled body, before being introduced in the culture medium, is preferably higher than 50 g, more preferably higher than 100 g and most preferably higher than 200 g.

The gelled body of the feed according to the invention comprises preferably cells and/or cell fragments of unicellular algae, more particularly in an amount of at least 20%, preferably at least 25%, and more preferably at least 35% by weight dry matter algae on total weight. The starting product for producing this feed is at least partially dried algae which are economically more feasible and practical for commercial use compared to live cells. Dried algae have been proven to be a good alternative for live algae cells to fulfil the nutritional requirements of the marine organisms. The serious drawback on the use of dried algae cells is the clogging of algae cells in the water, the fast deposit on the bottom or the sides of the culture tanks. The use of dried algae in the feed of the present invention offers a solution for these mentioned drawbacks.

The gelled body of the feed according to the invention may also comprise cells and/or cell fragments of yeast, more particularly in an amount of at least 20%, preferably at least 25%, and more preferably at least 35% by weight yeast dry matter on total weight. Yeast cells are nutritionally not as good as algae cells for the prey organisms, but they are frequently used because they are more available and less costly to produce. Yeast cells also have the drawback to clump together when introduced in the culture medium. Yeast cells embedded in gel offers a solution to overcome clumping or settlement.

In a preferred embodiment, the feed has a relatively high content of the cell or cell fragments of the unicellular algae and/or yeast. More particularly it contains at least 35% by weight dry matter of cells and/or cell fragments of algae and/or yeast. On a dry weight basis, it contains more than 40%, preferably more than 50% and most preferably more than 60% by weight cells and/or cell fragments of algae and / or yeast.

In a preferred embodiment, the gelling agent comprises a gum, belonging to a large family of water soluble celluloses (C₆H₁₀O₅)ₙ like: methylcellulose, ethylcellulose, hydroxypropylcellulose, hydroxypropylmethylcellulose (HPMC), methylethylcellulose, carboxymethylcellulose (CMC) etc. The gelling agent comprises preferably between 1 and 10% by weight of the total weight of the gel. Such a gel has a good constitution which allows above mentioned characteristics with respect to preventing clumping. Inclusion of more than 1% and less than 10% CMC of the gel gives a good constitution to the gelled feed but with HPMC the gel becomes more elastic and rolls in the hands without sticking to the hands or to the recipients. Different hydrocolloids and/or binders can improve the elasticity and the consistency and/or the release features of the feed according to the invention.

In the feed according to the invention, particulate additives, containing particles having a size smaller than 100 µm, preferably smaller than 50 µm, so that they can be ingested by the filter feeding organisms, can be easily incorporated in the gelled body or bodies. The incorporation of particulate additives in diets often causes problems regarding the deposit of these additives in the diet itself, mainly when the diets are liquid, which is often the case for live food organisms. When diets with deposited additives are administered to the prey organisms, unbalanced portions are introduced in the water. Incorporation of the particulate additives in a gelled diet according to the invention prevents deposit of the particles in the diet, because the additives are captured in the structure of the gel. Examples of commonly used particulate additives that normally deposit easily in diets are: pigments (astaxanthine, canthaxanthine...), vitamins (Vitamine B12...) and attractants.

Rotifers and *Artemia* are usually enriched with highly unsaturated fatty acids before they are fed as live prey organisms to larval fish or shrimp. Some algae and all yeasts do not fulfil the lipid requirements of the fish and shrimp. In the gelled body of the present invention, globules of lipids, preferably those with a high content of highly unsaturated fatty acids like EPA and DHA, can be easily incorporated in the gelled body. In a preferred embodiment, the gelled body contains more than 5%, preferably more than 7% by weight lipid globules next to algae and/or yeast cells and/or cell fragments on dry weight basis (i.e. more than 5 g lipids per 100 g feed dry matter (DW), the feed dry matter including all the components except water and can be determined by drying a known quantity (WW) of the feed in the oven at a temperature of 60°C till a constant weight is reached (DW). The feed dry matter percentage is calculated by DW*100/WW.

In the process according to the invention, algae and/or yeast cells and/or cell fragments are intermixed with a gelling agent and water till the water is bound and the slurry becomes a compact gelled body with a desired constitution and elasticity. The cells and/or cell fragments used to prepare the feed have preferably a moisture content of less than 20% by weight, more preferably of less than 15% by weight and most preferably of less than 10% by weight.

Most important filter feeding organisms which can be fed with the feed according to the present invention are rotifers and/or *Artemia,* since those species are worldwide used live prey organisms for shrimp and fish larvae and since the cell and/or cell fragments of unicellular algae and/or yeast are of the required size, even without fractioning. The method to culture filter feeding organisms, includes feeding the organisms or maintaining the organisms in culture medium in which the gelled body of the present invention is introduced. It should be noted that the term "culturing" does not only embrace the growing and multiplication of organisms but also the feeding thereof, usually for a relatively short period of time, to enrich the organism with desirable substances before being fed to the predators like fish or crustacean larvae.

Usually it is important that certain agents in the culture of marine organisms are administered in low quantities at several times to avoid overdoses or settlement and pollution of the additives in the culture tank. When incorporated in the gelled feed, together with algae and/or yeast, those agents will be slowly released at the same speed as the micro-algae and/or yeast. In this way, the distribution of the agents can be better controlled.

In the feed according to the invention, (water soluble) anti-microbial agents can be incorporated in the gelled body or bodies to control the hygienic properties of the culture medium or to stimulate certain microbial communities. It is important to introduce said disinfecting agents and/or micro-organisms in certain quantities with determined ranges in the culture medium. A concentration that is too low will have no effect on the microbial community of the culture medium. On the other hand, too high concentrations will adversely affect the culture organisms (rotifers, *Artemia* etc). Initial concentrations of the anti-microbial agent, incorporated in live feed diets is normally too high because of the gradual break down of the anti-microbial agent during the culture of the rotifers or *Artemia.* The initial concentration of the incorporated anti-microbial agent in the feed according to the invention will be lower because it will only be partly released when introduced in water. The gelled body will continue to release the further agents in small amounts, distributed over a certain period. This way, the distribution of the anti-microbial agent is better controlled in the culture medium and since lower, but more constant concentrations will be available in the culture tank, more different types of anti-microbial agents can be administered for those particular applications.

In a further preferred embodiment of the feed according to the invention, the gelled body comprises probiotic organisms. Meant under probiotic organisms are certain micro-organisms (live or dead bacteria, yeast...) that can be actively added to the feed product in order to achieve beneficial effects for the prey organisms or the predator (e.g.: enhanced digestibility, improved immune system) or that can replace at least partially the existing bacterial population present in the prey organism, the predator or in the surrounding medium mostly to prevent diseases. Examples of probiotic micro-organisms are (but not limited to): *Lactobacillus* strains, *Enterococcus* strains, *Bacillus* strains, *Pediococcus* strains, Saccharomyces strains etc. Minimum amounts of probiotic micro-organisms to have any beneficial effect are 10⁷ cells per gram feed (in case of dead bacteria or spores) or 10⁷ colony forming units per gram feed in case of live bacteria and 10⁷ cells per gram feed in case of yeast. When probiotic yeast is used which is at least partially dried, the amount of this probiotic yeast is included in the total amount of partially dried yeast.

The advantage of adding probiotic organisms in the feed according to the invention compared to adding probiotic organisms as such is that the functioning of the micro-organisms can be prolonged in time, mainly because the probiotic micro-organisms will be released at more or less the same speed as when the feed particles are released.

In the following examples all percentages are expressed as weight percentages and are calculated on the final wet weight.

### Example 1

Powder phase: Mix 44% spray-dried *Chlorella* algae powder (having a moisture content of about 5% by weight) with 5% anti-microbial agents and 2% HPMC.
Liquid phase: Add 6% oil emulsion ("DHA-Selco™" (a trademark of INVE), containing about 69% oil and 31% water) to 43% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 52% gel (including the water in the oil emulsion and the water soluble anti-microbial agents) and about 42% algae dry matter (about 79% on a dry matter basis). It further comprises about 8% of oil on a dry matter basis.

After 3 months in room temperature: the gel is still conserved well, no growth of fungi, bacteria or bad smells is observed.

Figure 1 shows the large difference in the particle size distribution between algal feed, consisting of the dried algae as such, suspended in water by means of a kitchen blender and the same algal feed, but gelled according to example 1, suspended in water by means of the same kitchen blender. Surprisingly more than 90% of the particles released of the gelled feed are between 1 and 7 µm (size of the single algal cells) while in the non-gelled feed only a small amount of the particles (less than 20% compared to the gelled feed) are available in this range. The other particles clump together, so fewer particles are available and they have a bigger particle size.

Figure 2 shows a graph illustrating the sinking speed of the algal particles illustrated in Figure 1 in 1 I Imhoff cones without aeration. It can clearly be seen that the particles in the algae diet (dried algae as such) that were not gelled before it was mixed, sediment faster to the bottom of the cone than the particles in the gelled diet. Consequently, compared to a dried algae feed as such, the feed according to the invention offers not only the advantage that the particles released in the culture medium have on average a smaller size so that they can be ingested more easily by the filter feeding organisms but also that the released particles settle considerably slower to the bottom so that, once released from the gelled body, they are longer available as feed for the filter feeding organisms. In this way, the feed can be used more efficiently causing less pollution of the culture medium. Additionally, the particles are released more slowly in the medium from the gelled body than when the particles are not contained in a gel matrix.

Figure 3 shows that the release rate of the individual algal cells, in real culture conditions (temp, volume, salinity), from a feed obtained in accordance with Example 1 can moreover be easily adjusted by varying for example the amount of gelling agent. For this experiment, three different percentages of HPMC (1 %, 2% and 2.5%) were used, the other components were used in the same amounts as indicated in Example 1. The diet with only 1 % HPMC, released the algae fast. The higher the amount of HPMC was, the slower the algae were released.

### Example 2

Powder phase: Mix 46% spray-dried *Chlorella* algae powder (having a moisture content of about 5%) with 4% anti-microbial agents, 1% HPMC and 4% vitamins.
Liquid phase: 45% water

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 50% gel (including the water soluble anti-microbial agents) and about 43% algae dry matter (about 80% on a dry matter basis). It further comprises about 8% of oil on a dry matter basis.

When introduced in the culture medium, the algal cells will slowly release from the gel and not clump together in aggregates. After 3 months in room temperature: the gel is still conserved well, no growth of fungi, bacteria or bad smells is observed.

### Example 3

Powder phase: Mix 20% *Isochrysis galbana* algae powder (having a moisture content of about 5%) with 4% anti-microbial agents, 2% HPMC, 8% proteins, 7% spray-dried yeast (having a moisture content of about 5%) and 8% vitamins.
Liquid phase: Add 6% oil emulsion ("DHA-Selco™") to 45% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 53% gel (including the water in the oil emulsion and the water soluble anti-microbial agents) and about 25% algae/yeast dry matter (about 48% on a dry matter basis). It further comprises about 8% of oil on a dry matter basis.

When introduced in the culture medium, the algal cells will slowly release from the gel and not clump together in aggregates. After 3 months in room temperature: the gel is still conserved well, no growth of fungi, bacteria or bad smells is observed.

### Example 4

Powder phase: Mix 24% spray-dried *Chlorella* algae powder (having a moisture content of about 5%) with 17% spray-dried *Ascophyllum nodosum* algae powder (having a moisture content of about 5%), 5% anti-microbial agents, 1.5% HPMC, and 2% vitamins.
Liquid phase: Add 6% oil emulsion ("Super-Selco™", containing about 67% of oil and 33% of water) to 44.5% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 53% gel (including the water in the oil emulsion and the water soluble anti-microbial agents) and about 39% algae dry matter (about 75% on a dry matter basis). It further comprises about 8% of oil on a dry matter basis.

When introduced in the culture medium, the algal cells will slowly release from the gel and not clump together in aggregates. After 3 months in room temperature: the gel is still conserved well, no growth of fungi, bacteria or bad smells are observed.

### Example 5

Powder phase: Mix 41% spray-dried *Chlorella* algae powder (having a moisture content of about 5%) with 5% anti-microbial agents, 2% HPMC and 2% vitamins.
Liquid phase: Add 15% oil emulsion ("DHA-Selco™") to 35% water and mix well.

Add the liquid phase to the powder mixture and mix until a dough-like mass is obtained. Take the dough out of the mixing machine and give it the desired shape. Preserve the obtained product in air-tight bags, preferably under vacuum. The obtained feed comprises about 46% gel (including the water in the oil emulsion and the water soluble anti-microbial agents) and about 39% algae dry matter (about 66% on a dry matter basis). It further comprises about 18% of oil on a dry matter basis.

When introduced in the culture medium, the algal cells will slowly release from the gel and not clump together in aggregates. After 3 months in room temperature: the gel is still conserved well, no growth of fungi, bacteria or bad smells is observed.

## Claims

1. Feed for the culture of aquatic organisms, in particular filter feeding organisms, containing an amount of at least 20% by weight, preferably at least 25% by weight, dry matter of at least partially dried cells and/or cell fragments of unicellular algae and/or yeast, **characterised in that** said feed is in the form of at least one gelled body, which has a weight of at least 1 g and which comprises, in addition to said cells and/or cell fragments of unicellular algae and/or yeast, between 30% and 80% by weight of a water soluble or dispersible gel wherein said cells and/or cell fragments are embedded.

2. Feed according to claim 1 **characterised in that** said gelled body comprises between 40 and 60% by weight of said gel.

3. Feed according to claim 1 or 2, **characterised in that** said gelled body has a weight of at least 10 g, preferably at least 50 g, more preferably at least 100 g and most preferably at least 200 g.

4. Feed according to any one of the claims 1 to 3, **characterised in that** said gelled body contains at least 20% by weight, preferably at least 25% by weight and more preferably at least 35% by weight, dry matter of at least partially dried cells and/or cell fragments of unicellular algae.

5. Feed according to any one of the claims 1 or 4, **characterised in that** said gelled body contains at least 20% by weight, preferably at least 25% by weight and more preferably at least 35% by weight, dry matter of at least partially dried cells and/or cell fragments of yeast.

6. Feed according to any one of the claims 1 to 5, **characterised in that** said gelled body contains more than 40%, preferably more than 50% and more preferably more than 60% of said at least partially dried cells and/or cell fragments, on a dry weight basis.

7. Feed according to any one of the claims 1 to 6, **characterised in that** said gelled body contains at least 35% by weight dry matter of at least partially dried cells and/or cell fragments of unicellular algae and/or yeast

8. Feed according to any one of the claims 1 to 7, **characterised in that** said at least partially dried cells and/or cell fragments have a moisture content of less than 20% by weight, preferably of less than 15% by weight and more preferably of less than 10% by weight.

9. Feed according to any one of the claims 1 to 8, **characterised in that** said gel comprises water and between 1 and 10% by weight of at least one gelling agent, the gelling agent comprising preferably a food gum, in particular CMC and/or HPMC, and preferably HPMC.

10. Feed according to any one of the claims 1 to 9, **characterised in that** said gelled body comprises at least one particulate additive containing particles having a size smaller than 100 µm, preferably smaller than 50 µm, which particulate additive is preferably substantially homogeneously distributed in the gelled body.

11. Feed according to any one of the claims 1 to 10, **characterised in that**, in addition to said cells and/or cell fragments, said gelled body contains more than 5%, preferably more than 7% lipids on a dry weight basis, the lipids being preferably emulsified in the gel.

12. Feed according to any one of the claims 1 to 11, **characterised in that** said gelled body comprises at least one anti-microbial agent, in particular an anti-microbial agent dissolved in the gel.

13. Feed according to any one of the claims 1 to 12, **characterised in that** said gelled body comprises at least one probiotic micro-organism, different from said unicellular algae, the probiotic micro-organism being present in an amount of at least 10⁷ colony forming units per gram feed if the probiotic micro-organism is a living micro-organism, or in an amount of at least 10⁷ cells per gram feed if the probiotic micro-organism is a dead micro-organism and/or a yeast.

14. Process to produce a feed according to any one of the claims 1 to 13, **characterised**
**in that** at least a gelling agent enabling to produce a water soluble or dispersible gel, water and at least partially dried cells and/or cell fragments of unicellular algae and/or yeast are mixed and the obtained mixture is formed into a gelled body of at least 1 g, and
**in that** the at least partially dried cells and/or cell fragments, the water and the gelling agent are used in such amounts that the gelled body comprises at least 20% by weight, preferably at least 25% by weight, dry matter of said at least partially dried cells and/or cell fragments and between 30% and 80% by weight of the water soluble or dispersible gel.

15. Process according to claim 14, **characterised in that** the at least partially dried cells and/or cell fragments used to produce said mixture have a moisture content of less than 20% by weight, preferably of less than 15% by weight and more preferably of less than 10% by weight.

16. Method to culture aquatic organisms, in particular marine filter feeding organisms such as rotifers and/or *Artemia,* **characterised in that** the marine filter feeding organisms are cultured in a culture medium wherein the feed according to anyone of the claims 1 to 13 is introduced to feed said organisms.

17. Method according to claim 16, **characterised in that** said gelled body of said feed comprises at least one anti-microbial agent in such an amount as to negatively affect growth of harmful micro-organisms in said culture medium.
